# EUROPEAN PATENT APPLICATION

(11) **EP 1 930 636 A2**
(43) Date of publication of application: **11.06.2008**
(21) Application number: 07122192.3
(22) Date of filing: 03.12.2007
(51) Int. Cl.: F16K 17/196

(54) **Bi-directional positive/negative pressure relief valve**

(30) Priority: 08.12.2006 US 873667 P; 25.04.2007 US 740007
(71) Applicant: Honeywell International, Inc., Morristown, NJ 07962 (US)
(72) Inventor: Vasquez, John A., Chandler, AZ 85224 (US); Banta, Paul W., Avondale, AZ 85392 (US); Garrod, Todd C., Gilbert, AZ 85233 (US); Dismukes, Ed N., Chandler, AZ 85224 (US); Pantier, David J., Gilbert, AZ 85234 (US)
(74) Representative: Buckley, Guy Julian

(57) **Abstract**

A bi-directional positive and negative pressure relief valve (100) includes valve elements (104, 106) and flow passages (122, 144) that are configured to provide a fairly specific pressure distribution on the valve elements (104, 106), and thus valve opening (134) may be controlled in a more precise manner. The valve element (104, 106) and flow passage (122, 144) configuration results in a valve (100) having a reduced size and weight, relatively higher rate and relatively smaller springs, and relatively smaller valve seat (128, 132) diameters. The bidirectional positive/negative pressure relief valve (100) furthermore exhibits relatively high pressure and flow control accuracy, and exhibits good valve stability.

## Description

### CROSS-REFERENCES TO RELATED APPLICATIONS

This application claims the benefit of U.S. Provisional Application No. 60/873,667, filed December 8, 2006.

### TECHNICAL FIELD

The present invention generally relates to bi-directional pressure relief valves and, more particularly, to a bi-directional pressure relief valve that exhibits improved controllability and improved valve stability.

### BACKGROUND

Many systems include one or more pressure responsive valves to control and/or maintain one or more pressures within prescribed limits. For example, many aircraft include fuel tank inerting systems. A fuel tank inerting system typically operates by displacing atmospheric air in the fuel tank ullage with an inert gas, such as nitrogen enriched air (NEA). The fuel tank inerting system may additionally include one or more valves to maintain the inert atmosphere in the fuel tanks by not unnecessarily allowing the inert gas to escape from, and preventing the atmospheric air from flowing into, the tanks. The valve (or valves) may also be configured to control the differential pressure between the surrounding atmosphere and the fuel tank internal volume to within a specified range.

In some instances, the valve that is used to control fuel tank-to-atmosphere differential pressure may be implemented as a bi-directional, positive and negative pressure relief valve. With such valves, if pressure within the associated fuel tank (or tanks) increases such that the fuel tank-to-atmosphere differential pressure exceeds a predetermined positive value, the valve opens in a direction that lowers tank internal pressure. Conversely, if pressure within the associated fuel tank (or tanks) decreases such that the fuel tank-to-atmosphere differential pressure falls below a predetermined negative value, the valve opens in a direction that increases tank internal pressure toward atmospheric pressure.

Although presently known bi-directional positive and negative pressure relief valves are generally safe and reliable, these valves can suffer certain drawbacks. For example, many of these valves are fairly large, heavy, and/or bulky, and may thus not fit within some constricted space envelopes. Many of these valves also do not exhibit relatively high pressure control and flow accuracies, and may also exhibit less than optimal stability. As a result, these valves may exhibit greater than desirable oscillatory motion during certain aircraft altitude changes.

Hence, there is a need for a bi-directional positive and negative pressure relief valve that can be sized to fit into constricted space envelopes and/or exhibits relatively high pressure and flow control accuracy and/or exhibits good valve stability. The present invention addresses one or more of these needs. Furthermore, other desirable features and characteristics of the present invention will become apparent from the subsequent detailed description and the appended claims, taken in conjunction with the accompanying drawings.

### BRIEF SUMMARY

In one embodiment, and by way of example only, a bi-directional positive and negative pressure relief valve includes a housing, a first valve element, a second valve element, a first spring element, and a second spring element. The housing includes a first valve seat, a first flow port, a second flow port, and an inner surface that defines a first flow passage between the first and second flow ports. The first valve element is mounted at least partially within the housing and is movable between a closed position and a plurality of open positions. In the closed position the first valve element engages the first valve seat and at least substantially prevents flow between the first and second flow ports. In the open positions the first valve element is spaced apart from the first valve seat and allows flow between the first and second flow ports. In addition, the first valve element defines a second valve seat and includes one or more flow openings that extend therethrough, and an outer peripheral surface spaced apart from the housing inner surface that defines a first restriction flow area therebetween. The second valve element is mounted at least partially within the housing and is movable between a closed position and a plurality of open positions. In the closed position the second valve element engages the second valve seat and at least substantially prevents flow through the one or more flow openings. In the open positions the second valve element is spaced apart from the second valve seat and allows flow through the one or more flow openings. The first spring element is disposed within the housing and is configured to supply a first bias force to the first valve element that urges the first valve element toward its closed position and maintains the first valve element in its closed position unless a differential fluid pressure between the first flow port and the second flow port exceeds a first predetermined differential pressure magnitude. The second spring element is disposed within the housing and is configured to supply a second bias force to the second valve element that urges the second valve element toward its closed position and maintains the second valve element in its closed position unless a differential fluid pressure between the first flow passage and the second flow passage exceeds a second predetermined differential pressure magnitude. The first valve element and at least a portion of the first flow passage are dimensioned such that the first restriction flow area varies as the first valve element moves between its closed position and at least one of its plurality of open positions.

In another exemplary embodiment, a bi-directional positive and negative pressure relief valve includes a housing, a first valve element, a second valve element, a first spring element, a second spring element, and a pneumatic damper. The housing includes a first valve seat, a first flow port, a second flow port, and an inner surface that defines a first flow passage between the first and second flow ports. The first valve element is mounted at least partially within the housing and is movable between a closed position and a plurality of open positions. In the closed position the first valve element engages the first valve seat and at least substantially prevents flow between the first and second flow ports. In the open positions the first valve element is spaced apart from the first valve seat and allows flow between the first and second flow ports. The first valve element additionally defines a second valve seat and includes one or more flow openings that extend therethrough. The second valve element is mounted at least partially within the housing and is movable between a closed position and a plurality of open positions. In the closed position the second valve element at least substantially prevents flow through the one or more flow openings. In the open positions flow through the one or more flow openings is allowed. The first spring element is disposed within the housing and is configured to supply a first bias force to the first valve element that urges the first valve element toward its closed position and maintains the first valve element in its closed position unless a differential fluid pressure between the first flow port and the second flow port exceeds a first predetermined differential pressure magnitude. The second spring element is disposed within the housing and is configured to supply a second bias force to the second valve element that urges the second valve element toward its closed position and maintains the second valve element in its closed position unless a differential fluid pressure between the second flow port and the first flow port exceeds a second predetermined differential pressure magnitude. The pneumatic damper coupled to the second valve element.

In yet another exemplary embodiment, a bi-directional positive and negative pressure relief valve includes a housing, a first valve element, a second valve element, a first spring element, a second spring element, and a pneumatic damper. The housing includes a first valve seat, a first flow port, a second flow port, and an inner surface that defines a first flow passage between the first and second flow ports. The first valve element is mounted at least partially within the housing and is movable between a closed position and a plurality of open positions. In the closed position the first valve element engages the first valve seat and at least substantially prevents flow between the first and second flow ports. In the open positions the first valve element is spaced apart from the first valve seat and allows flow between the first and second flow ports. In addition, the first valve element defines a second valve seat and includes one or more flow openings that extend therethrough, and an outer peripheral surface spaced apart from the housing inner surface that defines a first restriction flow area therebetween. The second valve element is mounted at least partially within the housing and is movable between a closed position and a plurality of open positions. In the closed position the second valve element engages the second valve seat and at least substantially prevents flow through the one or more flow openings. In the open positions the second valve element is spaced apart from the second valve seat and allows flow through the one or more flow openings. The first spring element is disposed within the housing and is configured to supply a first bias force to the first valve element that urges the first valve element toward its closed position and maintains the first valve element in its closed position unless a differential fluid pressure between the first flow port and the second flow port exceeds a first predetermined differential pressure magnitude. The second spring element is disposed within the housing and is configured to supply a second bias force to the second valve element that urges the second valve element toward its closed position and maintains the second valve element in its closed position unless a differential fluid pressure between the first flow passage and the second flow passage exceeds a second predetermined differential pressure magnitude. The pneumatic damper coupled to the second valve element. The first valve element and at least a portion of the first flow passage are dimensioned such that the first restriction flow area varies as the first valve element moves between its closed position and at least one of its plurality of open positions.

### BRIEF DESCRIPTION OF THE DRAWINGS

The present invention will hereinafter be described in conjunction with the following drawing figures, wherein like numerals denote like elements, and

FIG. 1 is a schematic representation of one embodiment of a bidirectional positive/negative pressure relief valve;

FIGS. 2 and 3 depict the schematically represented bidirectional positive/negative pressure relief valve of FIG. 1 in first and second pressure relief directions, respectively;

FIGS. 4-6 are close-up views of a portion of the valve of FIG. 1 with one of the valve elements in various valve positions;

FIG. 7 is a plan view of an exemplary physical implementation of the bidirectional positive/negative pressure relief valve of FIG. 1;

FIG. 8 is a cross section view of the bidirectional positive/negative pressure relief valve depicted in, and taken along line 8-8 of FIG. 7;

FIG. 9 is a graph that depicts simulation results for tank having a valve configured such that its valve elements snap open at predetermined differential pressures during an aircraft climb at 6000 feet per minute; and

FIG. 10 is a graph that depicts simulation results for tank having a valve configured in accordance with embodiments of the present invention during an aircraft climb at 6000 feet per minute.

### DETAILED DESCRIPTION OF A PREFERRED EMBODIMENT

The following detailed description is merely exemplary in nature and is not intended to limit the invention or the application and uses of the invention. Furthermore, there is no intention to be bound by any theory presented in the preceding background or the following detailed description.

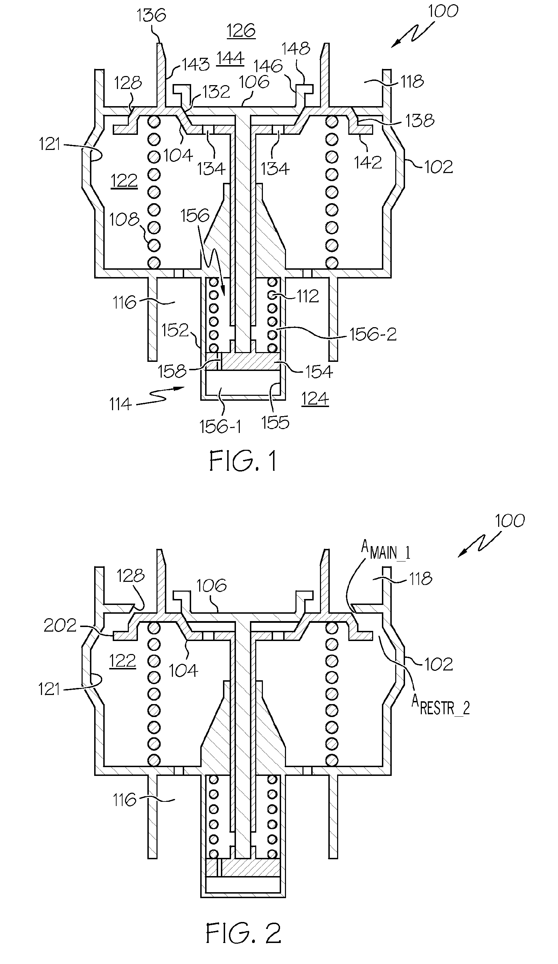

A schematic representation of one embodiment of a bidirectional positive/negative pressure relief valve 100 is depicted in FIG. 1, and includes a housing 102, a first valve element 104, a second valve element 106, a first spring element 108, a second spring element 112, and a pneumatic damper 114. The housing 102 includes a first flow port 116, a second flow port 118, and an inner surface 121 that defines a first flow passage 122 between the flow ports 116, 118. The valve 100 is preferably configured to be mounted in a manner that the first flow port 116 is in fluid communication with a first environment 124, and the second flow port 118 is in fluid communication with a second environment 126. It will be appreciated that the fist and second environments 124, 126 may vary, but in the depicted embodiment the first environment 124 is an aircraft fuel tank ullage, and the second environment is an ambient environment outside of the fuel tank. As FIG. 1 additionally depicts, the housing 102 further defines a first valve seat 128.

The first valve element 104 is preferably mounted within, or at least partially within, the housing 102 and is movable between a closed position, which is the position depicted in FIG. 1, and a plurality of open positions, one of which is the depicted in FIG. 2. With continued reference to FIG. 1, it may be seen that the first valve element 104 defines a second valve seat 132, and that one or more flow openings 134 extend through the first valve element 104. It may additionally be seen that the first valve element 104 includes a conduit 136, an annular section 138, and a skirt 142. The conduit 136 extends axially from the first valve element 104 and includes an inner surface 143 that defines a second flow passage 144. The annular section 138 also extends axially from the first valve element 104, but into the first flow passage 122. The skirt 142 extends radially from the annular section 138 toward the housing inner surface 121. When the first valve element 104 is in the closed position, it engages the first valve seat 128 and prevents, or at least substantially prevents, flow between the first and second flow ports 116, 118. Conversely, and with reference now to FIG. 2, when the first valve element 104 is in an open position, it no longer engages the first valve seat 128. As a result, the first and second flow ports 116, 118 are in fluid communication with one another, and fluid flow may occur between the flow ports 116, 118 via the flow passage 122.

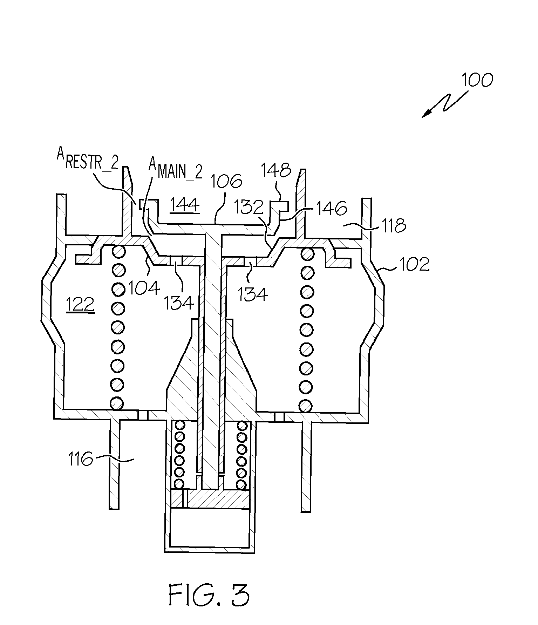

Returning once again to FIG. 1, it is seen that the second valve element 106 is also preferably mounted within, or at least partially within, the housing 102 and is movable between a closed position, which is the position depicted in FIG. 1, and a plurality of open positions, one of which is the depicted in FIG. 3. Moreover, similar to the first valve element 104, the second valve element 106 includes an annular section 146 and a skirt 148. The second valve element annular section 146 extends axially from the second valve element 106 into the second flow passage 144, and the second valve element skirt 148 extends radially from the second valve element annular section 146 toward the conduit inner surface 143. When the second valve element 106 is in its closed position, it engages the second valve seat 132 and prevents, or at least substantially prevents, flow through the one or more flow openings 134. Conversely, and with reference now to FIG. 3, when the second valve element 106 is in an open position, it no longer engages the second valve seat 132. As a result, flow may occur through the one or more flow openings 134, via the second flow passage 144.

The first and second valve elements 104, 106, as may be surmised from the schematic representations of FIGS. 1-3, are maintained in the respective closed positions as a result of bias forces supplied thereto by the first and second spring elements 108, 112, respectively. More specifically, the first spring element 108 is disposed within the housing 102 and is configured to supply a first bias force to the first valve element 104. The first bias force urges the first valve element 104 toward its closed position. In addition, the first spring element 108 is configured such that the first bias force supplied thereby maintains the first valve element 104 in its closed position unless a differential fluid pressure between the first flow port 116 and the second flow port 118 exceeds a first predetermined differential pressure magnitude. In the depicted embodiment, it is seen that the first valve element 104 will begin opening when the fluid pressure at the second flow port 118 exceeds the fluid pressure at the first flow port 116 by the first predetermined differential pressure magnitude. It will be appreciated that the value of the first differential pressure magnitude may vary, and may be selected to meet, for example, desired system and/or component specifications.

The second spring element 112 is also disposed within the housing 102 and is configured to supply a second bias force to the second valve element 106. The second bias force, similar to the effect of the first bias force on the first valve element 104, urges the second valve element 106 toward its closed position. The second spring element 112 is similarly configured such that the second bias force supplied thereby maintains the second valve element 106 in its closed position unless a differential fluid pressure between the first flow port 116 and the second flow port 118 exceeds a second predetermined differential pressure magnitude. In the depicted embodiment, it is seen that the second valve element 106 will begin opening when the fluid pressure at the first flow port 116 exceeds the fluid pressure at the second flow port 118 by the second predetermined differential pressure magnitude. It will be appreciated that the value of the second differential pressure magnitude, like the first predetermined differential pressure magnitude, may vary, and may be selected to meet, for example, desired system and/or component specifications.

The pneumatic damper 114 is disposed at least partially within the housing 102, and is coupled to both the first valve element 104 and the second valve element 106. The pneumatic damper 114, because it is coupled to both valve elements 104, 106, dampens the motion of either valve element 104, 106. The pneumatic damper 114 could be implemented using any one of numerous configurations, but in the depicted embodiment, it includes a damper housing 152 and a piston 154. The damper housing 152 is coupled to the valve housing 102 and includes an inner surface 155 that defines a pneumatic chamber 156. The piston 154 is coupled to the second valve element, and is movably disposed within the pneumatic chamber 156. The piston 154 divides the pneumatic chamber 156 into a first sub-chamber 156-1 and a second sub-chamber 156-2. A restriction orifice 158 is formed through the piston 154, which fluidly communicates the two sub-chambers 156-1, 156-2. Although the piston 154 is coupled to only the second valve element 106, it may be seen the depicted configuration results in the pneumatic damper 114 dampening the movement of both the first and second valve elements 104, 106, thereby reducing vibratory or oscillatory motion, and increasing overall valve 100 stability.

Returning once again to FIG. 2, it may be seen that when the first valve element 104 is in an open position, a first main flow area (AMAIN_1) is defined between the first valve element 104 and the first valve seat 128, and a first restriction flow area (ARESTR_1) is defined downstream of the first valve seat 128 between an outer periphery 202 of the first valve element 104 and at least a portion of the housing inner surface 121. Moreover, and as depicted most clearly in FIG. 3, when the second valve element 106 is in an open position, a second main flow area (AMAIN_2) is defined downstream of the second valve seat 132 between the second valve element 106 and the second valve seat 132, and a second restriction flow area (ARESTR_2) is defined between an outer periphery 302 of the second valve element 106 and the conduit inner surface 143.

It is noted that the main flow areas (AMAIN_1, AMAIN_2) vary as the valve elements 104, 106 move between the closed position and at least one of the plurality of open positions. More specifically, the first valve seat 128 and at least a portion of the first valve element 104 are dimensioned such that the first main flow area (AMAIN_1) varies as the first valve element 104 moves between its closed position and at least one of its plurality of open positions. Similarly, the second valve seat 132 and at least a portion of the second valve element 106 are dimensioned such that the second main flow area (AMAIN_2) varies as the second valve element 106 moves between its closed position and at least one of its plurality of open positions. This variation in the main flow areas (AMAIN_1, AMAIN_2) as the valve elements 104, 106 move, is a configuration that is implemented in most, if not all valves. However, the valve embodiments described herein are further configured such that the opening pressure distribution on the valve elements 104, 106 varies as each valve element 104, 106 moves between its closed position and at least one of its plurality of open positions. This functionality may be implemented using any one of numerous techniques, but in the depicted embodiment the valve 100 is configured such that, in addition to the variation in the first and second main flow areas (AMAIN_1, AMAIN_2), the first and second restriction flow areas (ARESTR_1, ARESTR_2) restrict flow, at least initially, when the first valve element 104 and the second 106 valve element, respectively, move from the closed position to at least one of a plurality of open positions.

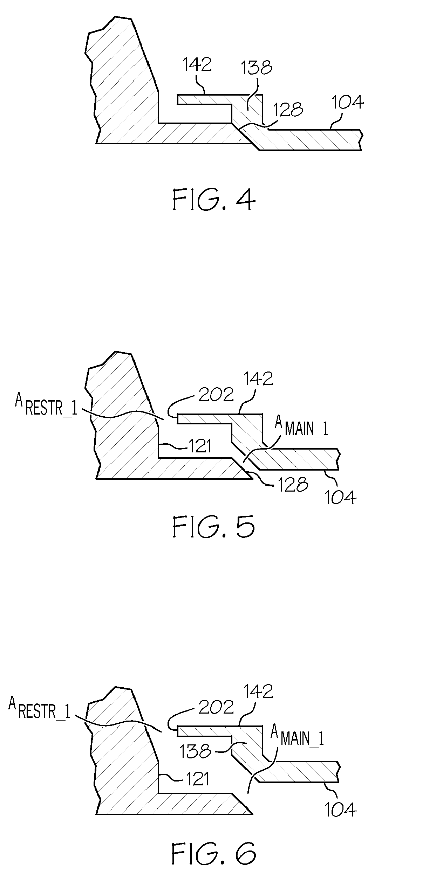

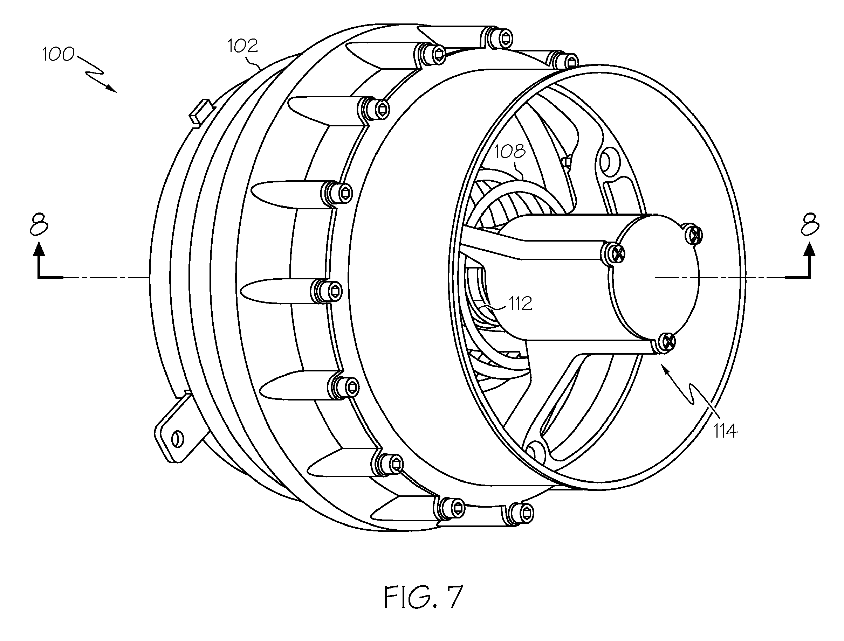

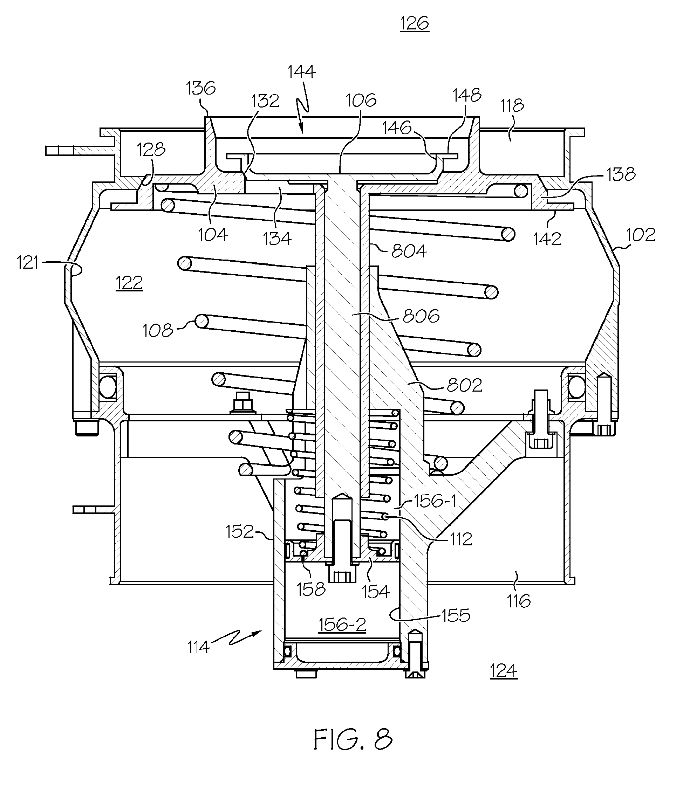

More specifically, and with reference now to FIGS. 4 and 5, it is seen that the housing inner surface 121 is configured such that as the first valve element 104 begins to open, flow between the first valve element skirt 142 and the valve housing 102 (or at least a section thereof) is initially restricted. If, however, the first valve element 104 continues to move toward a more open position, then the first restriction flow area (ARESTR_1) increases and, as depicted in FIG. 6, flow between the first valve element skirt 142 and the housing 102 concomitantly increases. As is depicted most clearly in FIGS. 7 and 8, when the second valve element 106 moves to an open position, flow between the second valve element skirt 148 and the conduit inner surface 143 is restricted. The conduit inner surface 143, unlike the housing inner surface 121, is not configured such that the second restriction flow area (ARESTR_2) varies as the second valve element 106 continues to move toward a more open position. It will be appreciated, however, that the conduit inner surface 143 and/or the second valve element 106 could be configured such that the second restriction flow area (ARESTR_2) does vary.

The valve 100 depicted schematically in FIGS. 1-3 may be implemented using any one of numerous physical configurations. One particular preferred physical configuration is depicted in FIGS. 7 and 8. It is noted that like components to those in FIGS. 1-3 are referenced using like reference numerals in FIGS. 7 and 8 and, as such, will not be further described in detail. In addition to the previously described components, it is seen that the physical implementation further includes a valve guide 802, a sleeve 804, and a shaft 806. The valve guide 802 is coupled to the housing 102 and, at least in the depicted embodiment, is formed integrally with the pneumatic damper 114. The sleeve 804 is coupled to the first valve element 104 and extends over the shaft 806. The shaft 806 is coupled to the second valve element 106, and extends through the sleeve 804 and into the valve guide 802. The shaft 806 is movably disposed within the sleeve 804, and the sleeve 804 and shaft 806 are both movable disposed within the valve guide 802.

With the valve element 104, 106 and flow passage 122, 144 configurations described above, a fairly specific pressure distribution on the valve elements 104, 106 may be obtained, and thus valve opening may be controlled in a more precise manner. Moreover, the above-described configurations allow result in a valve having a reduced size and weight, and the additional controlled flow restrictions allow for relatively higher rate, and thus relatively smaller, springs and smaller valve seat diameters. The bidirectional positive/negative pressure relief valve 100 depicted and described herein furthermore exhibits relatively high pressure and flow control accuracy, and exhibits good valve stability.

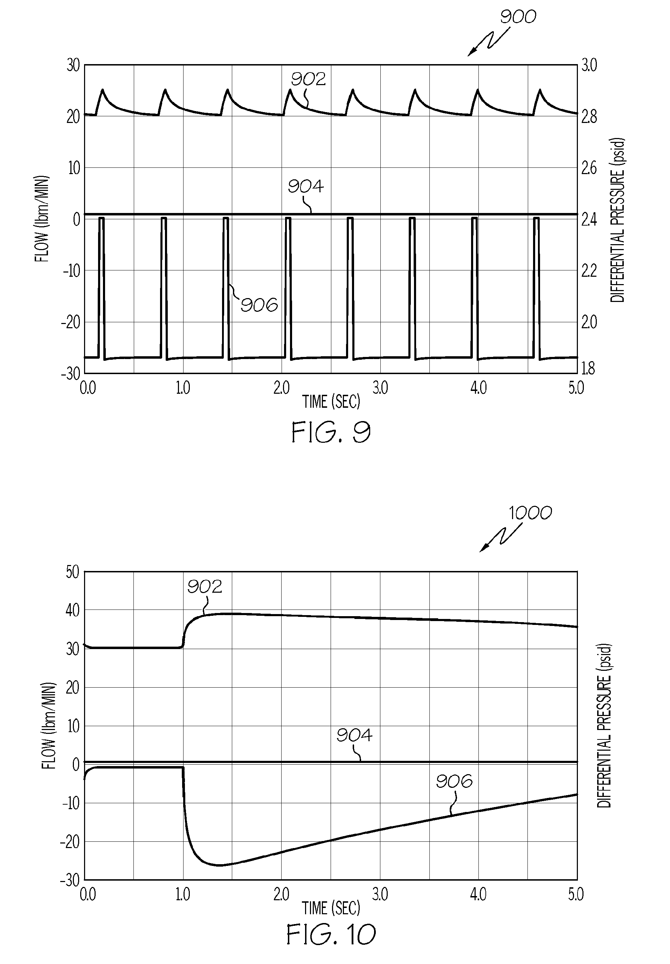

The above-described characteristics may be seen from the graphs depicted in FIGS. 9 and 10, which depict simulation results for a tank having a bidirectional positive/negative pressure relief valve coupled thereto and being supplied with a flow of nitrogen inerting gas. The graph 900 depicted in FIG. 9 is a simulation for a valve that is configured such that its valve elements snap open at predetermined differential pressures and during an aircraft climb from 7300 feet at 6000 feet per minute for five seconds. The graph 1000 depicted in FIG. 10 is a simulation for a valve that is configured in accordance with the embodiments described herein, in which its valve elements open more controllably, and during an aircraft climb, beginning at 100 seconds, from sea level at 6000 feet per minute for 500 seconds. Both graphs depict tank-to-ambient differential pressure 902, nitrogen gas flow into the tank 904, and flow though the bidirectional positive/negative pressure relief valve. In both graphs 900, 1000, it is seen that as the aircraft climbs the ambient pressure decreases, resulting in the bidirectional positive/negative pressure relief valve venting excess tank pressure to ambient. However, it is seen in FIG. 10 that the bidirectional positive/negative pressure relief valve configured as described herein operates more smoothly, more stable, and more controllable than presently known bidirectional positive/negative pressure relief valves.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A bi-directional positive and negative pressure relief valve (100), comprising:
a housing (102) including a first valve seat (128), a first flow port (116), a second flow port (118), and an inner surface (121) that defines a first flow passage (122) between the first and second flow ports (116, 118);
a first valve element (104) mounted at least partially within the housing (102) and movable between a closed position, in which the first valve element (104) engages the first valve seat (128) and at least substantially prevents flow between the first and second flow ports (116, 118), and a plurality of open positions, in which the first valve element (104) is spaced apart from the first valve seat (128) and allows flow between the first and second flow ports (116, 118), the first valve element (104) defining a second valve seat (132) and including one or more flow openings (134) that extend therethrough, and an outer peripheral surface spaced apart from the housing inner surface (121) that defines a first restriction flow area therebetween;
second valve element (106) mounted at least partially within the housing (102) and movable between a closed position, in which the second valve element (106) engages the second valve seat (132) and at least substantially prevents flow through the one or more flow openings (134), and a plurality of open positions, in which the second valve element (106) is spaced apart from the second valve seat (132) and allows flow through the one or more flow openings (134);
a first spring element (108) disposed within the housing (102) and configured to supply a first bias force to the first valve element (104) that urges the first valve element (104) toward its closed position and maintains the first valve element (104) in its closed position unless a differential fluid pressure between the first flow port (116) and the second flow port (118) exceeds a first predetermined differential pressure magnitude; and
a second spring element (112) disposed within the housing (102) and configured to supply a second bias force to the second valve element (106) that urges the second valve element (106) toward its closed position and maintains the second valve element (106) in its closed position unless a differential fluid pressure between the first flow passage (122) and the second flow passage (144) exceeds a second predetermined differential pressure magnitude,
wherein the first valve element (104) and at least a portion of the first flow passage (122) are dimensioned such that the first restriction flow area varies as the first valve element (104) moves between its closed position and at least one of its plurality of open positions.

2. The valve (100) of Claim 1, further comprising:
a conduit (136) coupled to and extending from the first valve element (104), the conduit (136) having an inner surface (143) that defines a second flow passage (144),
wherein:
flow between the first and second flow passages (122, 144) via the one or more flow openings (134) is prevented when the second valve element (106) is in the closed position, and
flow between the first and second flow passages (122, 144) via the one or more flow openings (134) is allowed when the second valve element (106) is in one of its plurality of open positions.

3. The valve (100) of Claim 2, wherein:
the second valve element (106) includes an outer peripheral surface spaced apart from the conduit inner surface (143) that defines a second restriction flow area therebetween; and
the second valve element (106) and at least a portion the second flow passage (144) are dimensioned such that the second restriction flow area varies as the second valve element (106) moves between its closed position and at least one of its plurality of open positions.

4. The valve (100) of Claim 1, further comprising:
a valve guide (802) coupled to the housing (102) and having disposed therein portions of the first and second valve elements (104, 106).

5. The valve (100) of Claim 4, further comprising:
a sleeve (804) coupled to the first valve element (104) and extending therefrom into the valve guide (802), the sleeve (804) movably disposed within the valve guide (802); and
a shaft (806) coupled to the second valve element (106) and extending therefrom into the valve guide (802), the shaft (806) movably disposed within and extending through the sleeve (804).

6. The valve (100) of Claim 4, wherein the first spring element (108) is disposed between the valve guide (802) and the first valve element (104).

7. The valve (100) of Claim 1, further comprising:
a pneumatic damper (114) coupled to the second valve element (106).

8. The valve (100) of Claim 7, wherein the pneumatic damper (114) comprises:
a damper housing (152) having an inner surface (155) that defines a pneumatic chamber (156);
a piston (154) coupled to the second valve element (106) and movably disposed within the pneumatic chamber (156).

9. The valve (100) of Claim 8, wherein:
the pistons (154) divides the pneumatic chamber (156) into a first sub-chamber (156-1) and a second sub-chamber (156-2), and
the pneumatic damper (114) further comprises a restriction orifice (158) extending through the piston (154) and fluidly communicating the first and second sub-chambers (156-1, 156-2).

10. The valve (100) of Claim 8, wherein the second spring element (112) is disposed at least partially within the pneumatic chamber.
